# EUROPEAN PATENT APPLICATION

(11) **EP 4 446 703 A1**
(43) Date of publication of application: **16.10.2024**
(21) Application number: 24169643.4
(22) Date of filing: 11.04.2024
(51) Int. Cl.: G01C 21/34, G01C 21/00

(54) **REAL-TIME ROUTE RECORDING AND NAVIGATION SYSTEM FOR HIGH DEFINITION MAP DATA COLLECTION**

(30) Priority: 11.04.2023 US 202363495490 P
(71) Applicant: TuSimple, Inc., San Diego, CA 92122 (US)
(72) Inventor: HUNG, Wan-Ting, San Diego, 92122 (US); WANG, Anping, San Diego, 92122 (US); XU, Ke, San Diego, 92122 (US); XU, Yilang, San Diego, 92122 (US); WANG, Karl, San Diego, 92122 (US)
(74) Representative: Hamer, Thomas Daniel

(57) **Abstract**

The present disclosure provides a data processing system, method, and device. A method for monitoring a high definition map data collection trip includes recording data collected from one or more sensors associated with a vehicle, determining a current vehicle location, and determining whether the vehicle is following a planned route based on the current vehicle location. On a condition that the vehicle is not following the planned route, the method includes including an indication in the recorded data collected from the one or more sensors associated with the vehicle that the vehicle is off-route; generating additional navigation instructions, wherein the additional navigation instructions return the vehicle to the planned route; and providing the additional navigation instructions to a driver of the vehicle.

## Description

### TECHNICAL FIELD

This document relates to systems, apparatus, and methods for real-time route recording and a navigation system for use during a high definition map data collection trip.

### BACKGROUND

For the last 100 years, autonomous driving has captured the imagination of scientists and automotive engineers alike. Now a reality, driverless cars are now roaming the streets in test condition, while autonomous vehicles are operational and allow traveling without some form of human input. Yet many hurdles still remain for autonomous driving.

For example, one of the biggest challenges for autonomous driving is the ability to determine the exact position of a vehicle in real-time. GPS solutions cannot keep up with autonomous vehicles, as they do not provide data that is sufficiently dynamic and accurate. For instance, GPS solutions do not provide a detailed inventory of road features and objects on the side of the road, nor do they extend the vision of autonomous vehicles to help with navigation.

### SUMMARY

Autonomous vehicles include devices that can operate to facilitate autonomous driving along a trajectory.

In some embodiments, a method for monitoring a high definition map data collection trip is provided. The method includes recording data collected from one or more sensors associated with a vehicle, determining a current vehicle location, and determining whether the vehicle is following a planned route based on the current vehicle location. On a condition that the vehicle is not following the planned route, the method includes including an indication in the recorded data collected from the one or more sensors associated with the vehicle that the vehicle is off-route; generating additional navigation instructions, wherein the additional navigation instructions return the vehicle to the planned route; and providing the additional navigation instructions to a driver of the vehicle.

In some embodiments, a method for monitoring a high definition map data collection trip is provided. The method includes recording data collected from one or more sensors associated with a vehicle, determining a current vehicle location, and determining whether the vehicle is following a planned route based on the current vehicle location. On a condition that the vehicle is not following the planned route, the method includes including an indication in the recorded data collected from the one or more sensors associated with the vehicle that the vehicle is off-route; generating an alert; uploading the alert to a command center; receiving additional navigation instructions from the command center, wherein the additional navigation instructions return the vehicle to the planned route; and displaying the additional navigation instructions on a display of an in-vehicle navigation device.

In some embodiments, a system for monitoring a high definition map data collection trip is provided. The system includes an in-vehicle navigation device including a display and a processor. The processor is configured to record data collected from one or more sensors associated with a vehicle, determine a current vehicle location, and determine whether the vehicle is following a planned route based on the current vehicle location. On a condition that the vehicle is not following the planned route, the processor is configured to include an indication in the recorded data collected from the one or more sensors associated with the vehicle that the vehicle is off-route; generate an alert; upload the alert to a command center; receive additional navigation instructions from the command center, wherein the additional navigation instructions return the vehicle to the planned route; and display the additional navigation instructions on a display of an in-vehicle navigation device.

In some embodiments, a data processing device is provided. The data processing device includes a memory configured to store executable program code and one or more processors configured to read the executable program code stored in the memory to cause the data processing device to perform operations for monitoring a high definition map data collection trip. The operations include recording data collected from one or more sensors associated with a vehicle, determining a current vehicle location, and determining whether the vehicle is following a planned route based on the current vehicle location. On a condition that the vehicle is not following the planned route, the operations include including an indication in the recorded data collected from the one or more sensors associated with the vehicle that the vehicle is off-route; generating an alert; uploading the alert to a command center; receiving additional navigation instructions from the command center, wherein the additional navigation instructions return the vehicle to the planned route; and displaying the additional navigation instructions on a display of an in-vehicle navigation device.

In some embodiments, an in-vehicle navigation device is provided. The in-vehicle navigation device includes one or more processors configured to cause the in-vehicle navigation device to perform operations including receive a voice comment activation command, determine a current vehicle location when it is determined that the voice comment activation command has been received, record an audio comment spoken by a driver of the vehicle; and upload the current vehicle location and content associated with the audio comment to a command center.

In some embodiments, a command center for monitoring a high definition map data collection trip is provided. The command center includes one or more processors configured to receive a vehicle location and content associated with an audio comment from an in-vehicle navigation device and store the vehicle location and the content associated with the audio comment with a planned route.

In some embodiments, a method for associating a driver comment with a current vehicle location is provided. The method includes receiving an indication that a driver of a vehicle has provided a voice comment activation command, determining a current vehicle location where the driver provided the voice comment activation command, providing a prompt to the driver to speak an audio comment, recording the audio comment, and uploading the current vehicle location and content associated with the audio comment to a command center.

In some embodiments, the above-described methods are embodied in a non-transitory computer readable storage medium comprising code that when executed by a processor, causes the processor to perform the methods described herein.

In some embodiments, a device that is configured or operable to perform the above-described methods is disclosed.

The above and other aspects and their implementations are described in greater detail in the drawings, the descriptions, and the claims.

### BRIEF DESCRIPTION OF THE DRAWINGS

FIG. 1 shows a block diagram of an example vehicle ecosystem in which autonomous driving operations can be determined, according to some embodiments of the present disclosure.
FIG. 2 shows a block diagram of components of an exemplary route planning and trip monitoring system, according to some embodiments of the present disclosure.
FIG. 3 shows an exemplary implementation of the route planning and trip monitoring system shown in FIG. 2, according to some embodiments of the present disclosure.
FIG. 4 shows a flowchart of an exemplary method for trip monitoring and returning a vehicle driver to a planned route, according to some embodiments of the present disclosure.
FIGS. 5A and 5B show a flowchart of another exemplary method for trip monitoring and returning a vehicle driver to a planned route, according to some embodiments of the present disclosure.
FIG. 6 shows an exemplary in-vehicle navigation device, according to some embodiments of the present disclosure.
FIG. 7 shows a flowchart of an exemplary method for a vehicle driver to add a voice comment to a planned route and relating to the present location of the vehicle, according to some embodiments of the present disclosure.

### DETAILED DESCRIPTION

Reference will now be made in detail to exemplary embodiments, examples of which are illustrated in the drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses, systems, and methods consistent with aspects related to subject matter that may be recited in the appended claims.

The methods and systems described herein enable a vehicle driver on a high definition map data collection trip to return to a planned data collection route from a deviation from the planned route as quickly as possible. Because each data collection route is planned to lane-specific precision, returning the vehicle to the specific lane of the planned route as quickly as possible is desired to help avoid having to repeat an entire data collection route or to repeat as short a segment of the data collection route as possible. An alert is provided to the driver that the planned route is not being followed and updated navigation instructions are provided to the driver to enable the driver to return to the planned route as quickly as possible.

For safe operation of an autonomous vehicle, high definition map data (e.g., lane-specific data) is needed. Due to the range of the various sensors associated with the data collection vehicle (e.g., LIDAR, RADAR, or cameras, as will be described further below), it may be necessary for the data collection vehicle to travel the same route multiple times to gather the requisite level of detail needed for the high definition map. For example, if a high definition map is to be created for a section of a four-lane wide highway, it may be necessary to have the vehicle drive the same section of the highway in each lane. For example, a first trip is taken in the leftmost lane of the section, a second trip is taken in the second lane from the left of the section, a third trip is taken in the third lane from the left of the section, and a fourth trip is taken in the fourth lane from the left of the section (e.g., the rightmost lane). If on any of those four trips, the vehicle is not in the designated lane for the entire section, that trip may need to be repeated to ensure that the correct data has been collected. For example, if on the fourth trip there is a disabled vehicle in the rightmost lane, the data collection vehicle will need to change lanes to continue operating safely. However, there will be a gap in the map data for the portion of the fourth trip that the data collection vehicle was not in the rightmost lane, so at least that portion of the fourth trip will need to be repeated to fill in the gap in the map data. If the driver deviates from the planned route (e.g., is not in the designated lane at the designated location on the road), it is desirable to return the driver to the planned route as quickly as possible.

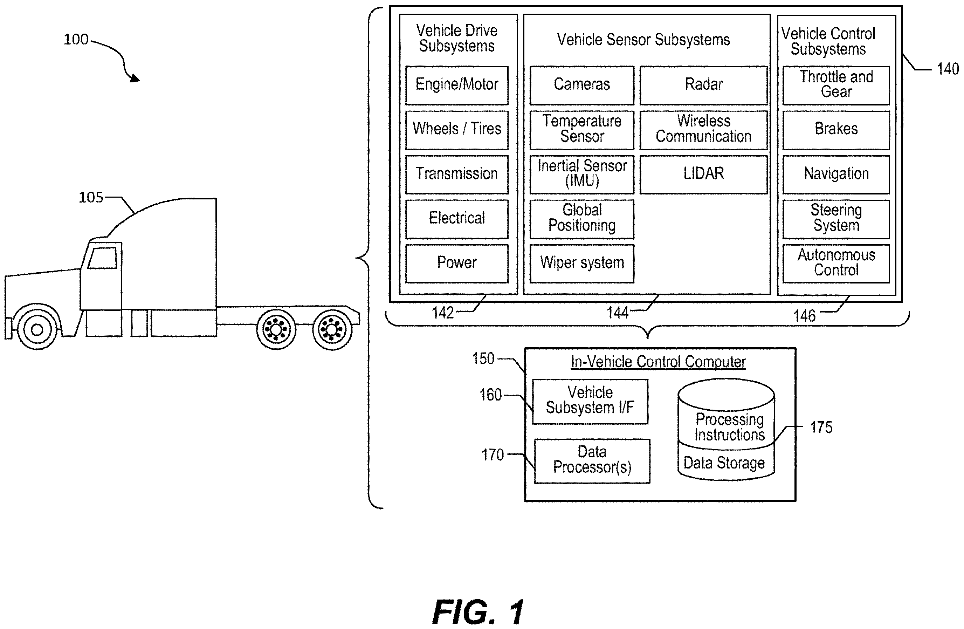

FIG. 1 shows a block diagram of an example vehicle ecosystem 100 in which autonomous driving operations can be determined, according to some embodiments of the present disclosure. As shown in FIG. 1, a vehicle 105 may be a semi-trailer truck. The vehicle ecosystem 100 may include several systems and components that can generate or deliver one or more sources of information/data and related services to an in-vehicle control computer 150 that may be located in a vehicle 105. The in-vehicle control computer 150 can be in data communication with a plurality of vehicle subsystems 140, all of which can be resident in the vehicle 105. A vehicle subsystem interface 160 is provided to facilitate data communication between the in-vehicle control computer 150 and the plurality of vehicle subsystems 140. In some embodiments, the vehicle subsystem interface 160 can include a controller area network (CAN) controller to communicate with devices in the vehicle subsystems 140.

The vehicle 105 may include various vehicle subsystems that support the operation of vehicle 105. The vehicle subsystems may include a vehicle drive subsystem 142, a vehicle sensor subsystem 144, or a vehicle control subsystem 146. The components or devices of the vehicle drive subsystem 142, the vehicle sensor subsystem 144, and the vehicle control subsystem 146 are shown as examples. The vehicle drive subsystem 142 may include components operable to provide powered motion for the vehicle 105. For example, the vehicle drive subsystem 142 may include an engine or motor, wheels/tires, a transmission, an electrical subsystem, and a power source.

The vehicle sensor subsystem 144 may include a number of sensors configured to sense information about an environment or condition of the vehicle 105. The vehicle sensor subsystem 144 may include one or more cameras or image capture devices, one or more temperature sensors, an inertial measurement unit (IMU), a Global Positioning System (GPS) transceiver, a laser range finder/LIDAR unit, a RADAR unit, or a wireless communication unit (e.g., a cellular communication transceiver). The vehicle sensor subsystem 144 may also include sensors configured to monitor internal systems of the vehicle 105 (e.g., an O₂ monitor, a fuel gauge, an engine oil temperature, etc.).

The IMU may include any combination of sensors (e.g., accelerometers and gyroscopes) configured to sense position and orientation changes of the vehicle 105 based on inertial acceleration. The GPS transceiver may be any sensor configured to estimate a geographic location of the vehicle 105. For this purpose, the GPS transceiver may include a receiver/transmitter operable to provide information regarding the position of the vehicle 105 with respect to the Earth. The RADAR unit may represent a system that utilizes radio signals to sense objects within the local environment of the vehicle 105. In some embodiments, in addition to sensing the objects, the RADAR unit may additionally be configured to sense the speed and the heading of the objects proximate to the vehicle 105. The laser range finder or LIDAR unit may be any sensor configured to sense objects in the environment in which the vehicle 105 is located using lasers. The cameras may include one or more devices configured to capture a plurality of images of the environment of the vehicle 105. The cameras may be still image cameras or motion video cameras.

The vehicle control subsystem 146 may be configured to control operation of the vehicle 105 and its components. Accordingly, the vehicle control subsystem 146 may include various elements such as a throttle and gear, a brake unit, a navigation unit, a steering system or an autonomous control unit. The throttle may be configured to control, for instance, the operating speed of the engine and, in turn, control the speed of the vehicle 105. The gear may be configured to control the gear selection of the transmission. The brake unit can include any combination of mechanisms configured to decelerate the vehicle 105. The brake unit can use friction to slow the wheels in a standard manner. The brake unit may include an Anti-lock brake system (ABS) that can prevent the brakes from locking up when the brakes are applied. The navigation unit may be any system configured to determine a driving path or route for the vehicle 105. The navigation unit may additionally be configured to update the driving path dynamically while the vehicle 105 is in operation. In some embodiments, the navigation unit may be configured to incorporate data from the GPS transceiver and one or more predetermined maps so as to determine the driving path for the vehicle 105. The steering system may represent any combination of mechanisms that may be operable to adjust the heading of vehicle 105 in an autonomous mode or in a driver-controlled mode.

The autonomous control unit may represent a control system configured to identify, evaluate, and avoid or otherwise negotiate potential obstacles in the environment of the vehicle 105. In general, the autonomous control unit may be configured to control the vehicle 105 for operation without a driver or to provide driver assistance in controlling the vehicle 105. In some embodiments, the autonomous control unit may be configured to incorporate data from the GPS transceiver, the RADAR, the LIDAR, the cameras, or other vehicle subsystems to determine the driving path or trajectory for the vehicle 105.

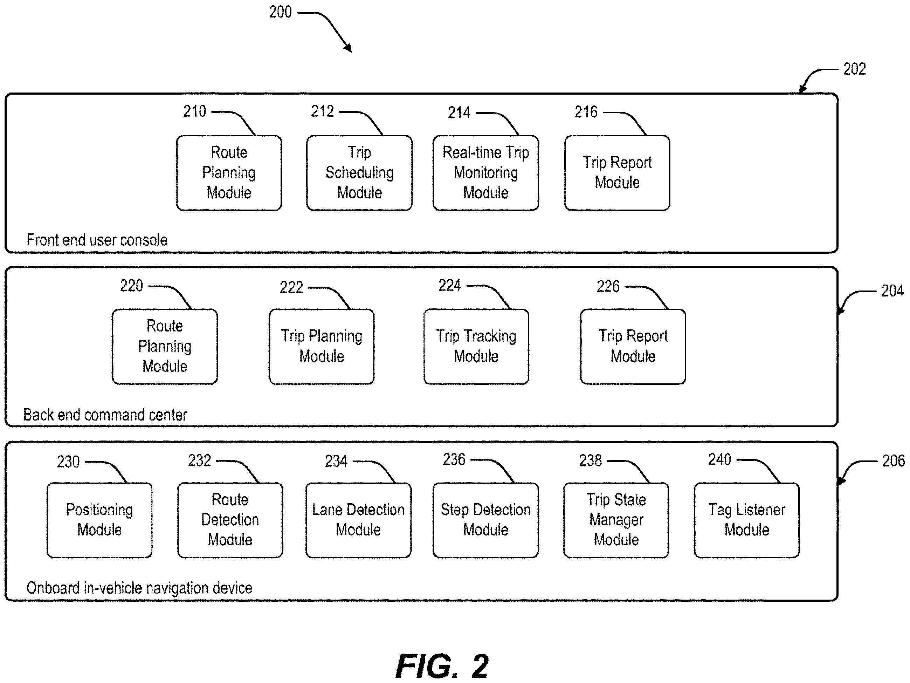

Many or all of the functions of the vehicle 105 can be controlled by the in-vehicle control computer 150. The in-vehicle control computer 150 may include at least one data processor 170 (which can include at least one microprocessor) that executes processing instructions stored in a non-transitory computer readable medium, such as the data storage device 175 or memory. The in-vehicle control computer 150 may also represent a plurality of computing devices that may serve to control individual components or subsystems of the vehicle 105 in a distributed fashion. In some embodiments, the data storage device 175 may contain processing instructions (e.g., program logic) executable by the data processor 170 to perform various methods or functions of the vehicle 105, including those described for the various modules described in FIGS. 2-7 as further explained herein.

The data storage device 175 may contain additional instructions as well, including instructions to transmit data to, receive data from, interact with, or control one or more of the vehicle drive subsystem 142, the vehicle sensor subsystem 144, and the vehicle control subsystem 146. The in-vehicle control computer 150 can be configured to include a data processor 170 and a data storage device 175. The in-vehicle control computer 150 may control the function of the vehicle 105 based on inputs received from various vehicle subsystems (e.g., the vehicle drive subsystem 142, the vehicle sensor subsystem 144, and the vehicle control subsystem 146).

FIG. 2 shows a block diagram of components of an exemplary route planning and trip monitoring system 200, according to some embodiments of the present disclosure. The system 200 may include a front end user console 202, a back end command center 204, and an onboard in-vehicle navigation device 206. The user console 202 may be implemented as a computer (e.g., a desktop computer or a laptop computer) in communication with the command center 204. The command center 204 may be implemented as a computer (e.g., a server, a desktop computer, or a laptop computer) in communication with the user console 202 and the in-vehicle navigation device 206. The in-vehicle navigation device 206 may be implemented as a touch-screen device, such as a tablet, and may be configured to be placed in a vehicle such that a driver of the vehicle may interact with the in-vehicle navigation device 206 while driving the vehicle.

The user console 202 may include a processor configured to perform several functions, including a route planning module 210, a trip scheduling module 212, a real-time trip monitoring module 214, and a trip report module 216. It is noted that the different modules 210-216 may be implemented as hardware (e.g., an application-specific integrated circuit (ASIC)), as software, or as a combination of hardware and software. The route planning module 210 may be used to plan a route for a driver of a vehicle to follow, for example, in connection with data gathering for high definition map data collection. The trip scheduling module 212 may be used to schedule a data gathering trip for high definition map data collection, for example, after the route has been planned in the route planning module 210. The real-time trip monitoring module 214 may be used to monitor a vehicle in real-time while the vehicle is traveling on a data gathering trip for high definition map data collection, for example, and may be used to determine whether the vehicle is following the planned route, as will be described in greater detail below. The trip report module 216 may receive gathered data about the data gathering trip for high definition map data collection from the in-vehicle navigation device 206 (either directly from the in-vehicle navigation device 206 or via the command center 204) after the trip has been completed. The trip report module 216 may also be configured to analyze the actual route taken by the vehicle after the trip has been completed to highlight possible areas on the planned route where the vehicle driver did not strictly follow the planned route.

The command center 204 may include a processor configured to perform several functions, including a route planning module 220, a trip planning module 222, a trip tracking module 224, and a trip report module 226. It is noted that the different modules 220-226 may be implemented as hardware (e.g., an application-specific integrated circuit (ASIC)), as software, or as a combination of hardware and software. The route planning module 220 may be used in conjunction with the user console 202 and the route planning module 210 to plan a route for a driver of a vehicle to follow, for example, in connection with data gathering for high definition map data collection. The trip planning module 222 may be used in conjunction with the user console 202 and the trip scheduling module 212 to schedule a data gathering trip for high definition map data collection, for example, after the route has been planned in the route planning module 220.

The trip tracking module 224 may be used in conjunction with the user console 202 and the real-time trip monitoring module 214 to monitor a vehicle in real-time while the vehicle is traveling on a data gathering trip for high definition map data collection, for example. The trip tracking module 224 may be configured to receive status messages from the in-vehicle navigation device 206. For example, the status messages may include the current vehicle position or a state change message, such as whether the vehicle has changed lanes or has deviated from the planned route. The trip report module 226 may be used in conjunction with the user console 202 and the trip report module 216 to receive gathered data about the data gathering trip for high definition map data collection from the in-vehicle navigation device 206 after the trip has been completed.

The in-vehicle navigation device 206 may include a display and a processor configured to perform several functions, including a positioning module 230, a route detection module 232, a lane detection module 234, a step detection module 236, a trip state manager module 238, and a tag listener module 240. It is noted that the different modules 230-240 may be implemented as hardware (e.g., an application-specific integrated circuit (ASIC)), as software, or as a combination of hardware and software. The positioning module 230 may be used to determine a current position of the vehicle. For example, the positioning module may use a high-precision GPS module to detect the vehicle's current location, either by including the GPS module or by being in communication with the GPS module. The positioning module 230 may periodically output the vehicle's current position, for example, every second or another predetermined time interval.

The route detection module 232 may be used to determine whether the vehicle is on the route planned by the route planning modules 210, 220. The route detection module 232 may receive the vehicle's current position (for example, from the positioning module 230) and may periodically update an internal status of whether the vehicle is on the planned route (for example, every two seconds or other predetermined time interval). The route detection module 232 may output whether the vehicle is on the planned route on demand (for example, in response to a request) or periodically.

The lane detection module 234 may be used to determine which lane on a road the vehicle is currently traveling in. For example, the lane detection module 234 may know the vehicle's current position on the road and the lane width, and based on those values, calculate which lane that the vehicle is currently traveling in. For example, the lane detection module 234 may compute the distance between the current vehicle position and a midline of the leftmost lane of the road, then integer divide the distance by the lane width. The quotient is the lane that the vehicle is currently located in, with the leftmost lane having an index of 0.

The route detection module 232 and the lane detection module 234 may work in conjunction with each other to help determine whether the vehicle is following the planned route. For example, the planned route may indicate that the vehicle is supposed to be traveling in the third lane from the left on a four lane-wide highway. But if there is an obstacle preventing the driver from being in the third lane from the left at the designated location (for example, there may be another vehicle, an accident, or road hazard that prevented the driver from being in the third lane from the left), this would be detected as a deviation from the route. Additional details on route deviation are provided elsewhere in this disclosure.

The step detection module 236 may be used to track the vehicle's movement and compare it to the pre-determined navigation instructions. For example, as the vehicle approaches a navigation instruction, such as a turn or intersection, the step detection module 236 detects the upcoming change and presents a modal (for example, a pop-up alert on the in-vehicle navigation device 206) to alert the driver of the upcoming turn.

The trip state manager module 238 may be used to manage the state of the data collection trip, including starting, pausing, resuming, and ending trips. The trip state manager module 238 also stores a trip identifier (for example, an alphanumeric string) and details such as the trip's route and all steps of the route.

The tag listener module 240 may be used to enable a driver to tag geospatial information while driving the vehicle. The tag listener module 240 may present a user interface on the in-vehicle navigation device 206 that allows the driver to quickly and easily input information by voice, such as the start of rain, the presence of an emergency lane vehicle, or any other relevant information. The tag listener module 240 may use GPS to provide accurate location data and utilizes wireless connectivity to transmit data to the command center 204 in real-time. The command center 204 can receive the data transmitted by the onboard module, analyze the information, and make decisions in real-time. The tag listener module 240 is designed to provide a feedback loop that enables the driver to improve the quality of the data collected, ensuring that the information transmitted to the command center 204 is accurate and useful.

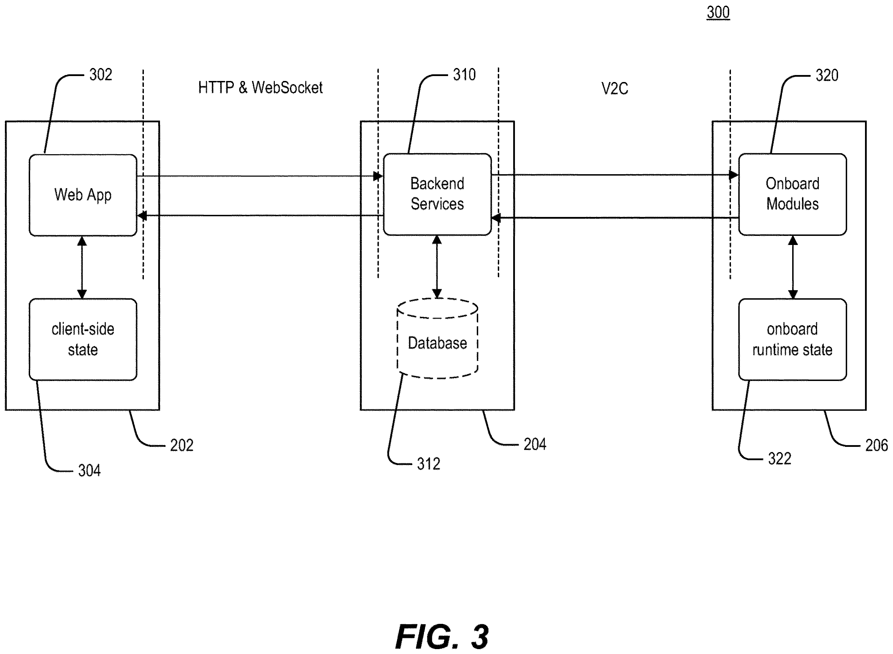

FIG. 3 shows an exemplary implementation of the route planning and trip monitoring system shown in FIG. 2, according to some embodiments of the present disclosure. The data collection platform 300 may include the front end user console 202, the back end command center 204, and the onboard in-vehicle navigation device 206. The user console 202 may be implemented as a web application ("web app") 302 with a local memory 304 configured to store local (e.g., "client-side") state information. The command center 204 may be implemented as one or more backend services 310 that stores states as data in a database 312, which serve as a single source of truth in the platform 300. The in-vehicle navigation device 206 may be implemented as one or more onboard modules 320 with a local memory 322 configured to store onboard runtime state information.

During the trip monitoring phase, frequent communication between the user console 202, the command center 204, and the in-vehicle navigation device 206 can lead to frequent state updates, whereas each component needs to maintain its state and align with the other two components. For example, a command triggered by a user in the web application 302 can lead to a data update in the database 312 managed by the backend services 310 and in the states 322 managed by the onboard modules 320. As another example, a vehicle state update from the onboard modules 320 can be synchronized to the backend services 310 and broadcasted to the web application 302. As another example, a rerouting route generated by the backend services 310 can be sent to the onboard modules 320 and the web application 302.

Because the data stored in the database 312 serves as the single source of truth in the platform 300, while the web application 302 and onboard modules 320 only maintain temporary states in memories 304 and 322, they can communicate with the backend services 310 to fetch the latest states and request state updates. But the web application 302 does not communicate directly with the onboard modules 320 and vice versa.

The communication between the backend services 310 and the onboard modules 320 utilizes vehicle to cloud to vehicle communications (V2C). V2C acts like a message queue with message retention. Thus, if the backend services 310 produce multiple messages but the onboard modules 320 lose the network connection or crash at the same time, once the onboard modules 320 recover, they can consume the unconsumed messages in order without any data loss. If an onboard module 320 raises an error or crashes during processing a consumed message, once the onboard module 320 recovers, the message can be consumed again. The same principle applies to the other direction.

The communication between the web application 302 and the backend services 310 are implemented over Hypertext Transfer Protocol (HTTP) and WebSocket. HTTP is used for REpresentational State Transfer (REST) application programming interfaces (APIs) only, while WebSocket is used to allow the backend services 310 to broadcast state updates to the web application 302. In some embodiments, if multiple web applications 302 are running, the backend services 310 can broadcast state updates to all running web applications 302. If the WebSocket server is down or the web application 302 is experiencing an intermittent network connection while the backend services 310 are trying to broadcast messages, unlike V2C, those messages will be lost. However, the web application 302 is able to refetch the latest states by refreshing the page and sending API requests anytime later.

Since both the client-side state in memory 304 and the onboard runtime state in memory 322 are temporary, the web application 302 and the onboard modules 320 are required to fetch the latest states from the backend services 310 to ensure they are synchronized. Refetching the latest states at the beginning of each component's lifecycle will enforce state synchronization before each component turns to running. Both the web application 302 and the onboard modules 320 will not store its states in any form locally for future direct retrieval.

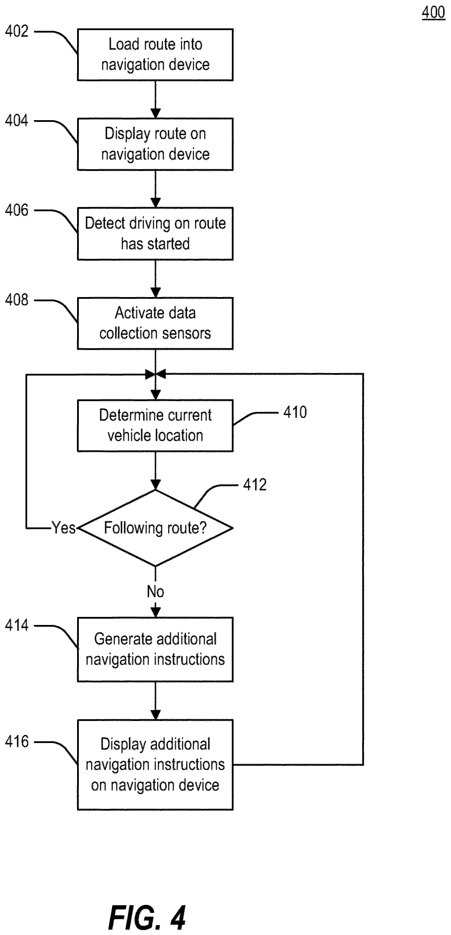

FIG. 4 shows a flowchart of an exemplary method 400 for trip monitoring and returning a vehicle driver to a planned route, according to some embodiments of the present disclosure. The method 400 may be performed by the in-vehicle navigation device 206 in communication with the command center 204. A route to be traveled by the vehicle is loaded into the in-vehicle navigation device 206 (step 402). The route is displayed on the in-vehicle navigation device 206 (step 404). For example, the route may be displayed based on a user interface of the in-vehicle navigation device.

The device detects that the driver has started to drive the vehicle on the route (step 406). For purposes of a high definition map data collection trip, the various sensors on the vehicle are continuously gathering data and are activated when the data collection vehicle starts on the route (step 408). Data received by the sensors (e.g., a GPS sensor, positioning module 230, route detection module 232, or lane detection module 234) may be used to determine the vehicle's current location (step 410).

A determination is made whether the vehicle is following the planned route (step 412). For example, the trip monitoring module 214 or the route detection module 232 in connection with the positioning module 230 and the lane detection module 234 may determine whether the vehicle is in a lane at a location designated by the planned route. In some embodiments, the in-vehicle navigation device 206 may generate a periodic status message, for example, a "heartbeat" message, which includes a vehicle identifier, a timestamp, and the current vehicle location. The frequency of the status messages may be a predetermined value, for example, every one second, every two seconds, or another predetermined time interval. To determine whether a change in position has occurred, a queue (for example, a first-in, first-out (FIFO) queue) may be used to store a predetermined number of status messages (for example, ten messages). If more than a threshold number of status messages in the queue (for example, 80% or more) have the same status (for example, an indication of a lane change), then the position change may be determined to have occurred at a time equal to the timestamp of the first status message that included the different vehicle position information. If fewer than the threshold number of status messages in the queue (for example, fewer than 80%) have the same status, then the position change may be determined to have not occurred and the differences in the status messages may be considered as temporary noise. The size of the queue and the threshold number of status messages in the queue that need to agree before a change is determined may be user-configurable parameters.

If the vehicle is following the planned route (step 412, "yes" branch), then the method 400 loops back to step 410 to determine the vehicle's current location.

If the vehicle is not following the planned route (step 412, "no" branch), then additional navigation instructions are generated to return the driver to the planned route as quickly as possible (step 414). Because each data collection route is planned to lane-specific precision, returning the vehicle to the specific lane of the planned route as quickly as possible is desired to help avoid having to repeat an entire data collection route or to repeat as short a segment of the data collection route as possible. In some embodiments, when the vehicle is not following the planned route, an indication is sent from the in-vehicle navigation device 206 to the command center 204. The command center 204 may access the planned route and, based on the current vehicle location, may determine the additional navigation instructions needed to return the vehicle to the planned route as quickly as possible. The command center 204 may then send the additional navigation instructions to the in-vehicle navigation device 206 for display. In other embodiments, when the vehicle is not following the planned route, the in-vehicle navigation device 206 may determine the additional navigation instructions needed to return the vehicle to the planned route as quickly as possible and then displays the additional navigation instructions.

The additional navigation instructions are displayed on the in-vehicle navigation device 206 (step 416) and the method 400 loops back to step 410 to determine the vehicle's current location.

If the vehicle is not following the planned route (step 412, "no" branch), the sensors are still collecting and recording the data, but may include a tag with the data (for example, the tag may be a string such as "off-route") to indicate that the data is still being collected while the vehicle is off the planned route.

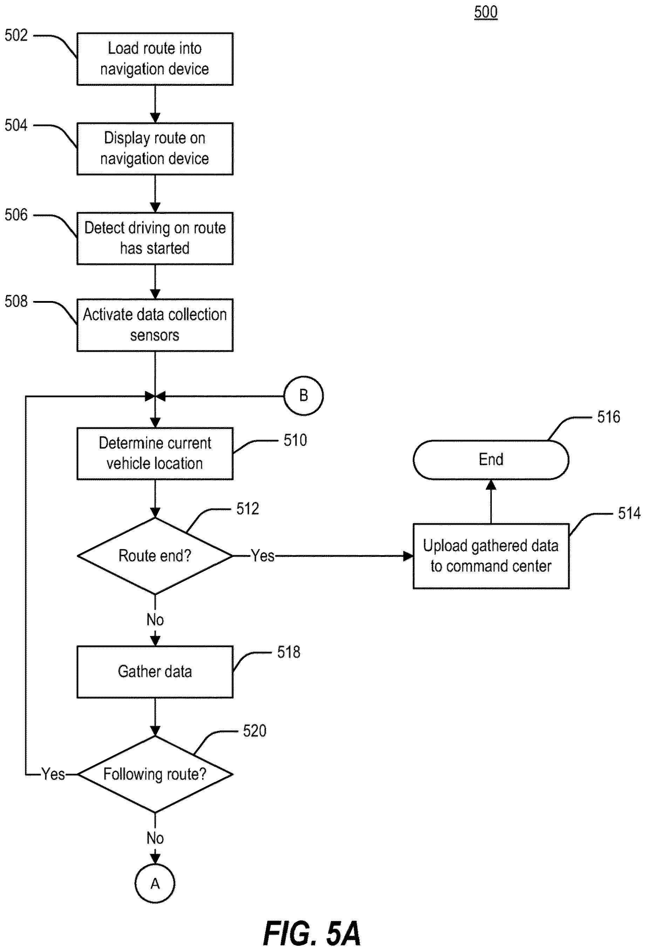

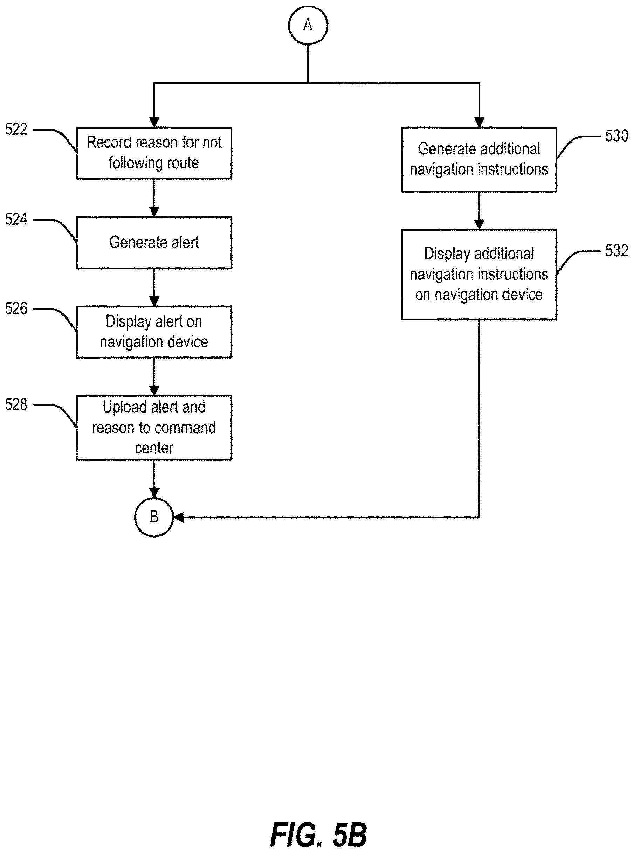

FIGS. 5A and 5B show a flowchart of another exemplary method 500 for trip monitoring and returning a vehicle driver to a planned route, according to some embodiments of the present disclosure. The method 500 may be performed by the in-vehicle navigation device 206 in communication with the command center 204. A route to be traveled by the vehicle is loaded into the in-vehicle navigation device 206 (step 502). The route is displayed on a user interface of the in-vehicle navigation device 206 (step 504).

The device detects that the driver has started to drive the vehicle on the route (step 506). For purposes of a high definition map data collection trip, the various sensors on the vehicle are continuously gathering data and are activated when the data collection vehicle starts on the route (step 508). Data received by the sensors (e.g., a GPS sensor, positioning module 230, route detection module 232, or lane detection module 234) may be used to determine the vehicle's current location (step 510). A determination is made whether the current vehicle location indicates that the vehicle has reached the end of the planned route (step 512). For example, because the entire route is planned, the endpoint of the route is known in advance, and the current vehicle location may be compared to the predetermined endpoint of the planned route.

If the vehicle has reached the end of the planned route (step 512, "yes" branch), then the data gathered during the data gathering trip is uploaded to the command center 204 (step 514) and the method 500 terminates (step 516). In some embodiments, the data gathered by the sensors in the vehicle may be stored in the in-vehicle navigation device 206 and uploaded when the mapping trip is completed. For example, the data may be uploaded at the end of the mapping trip in case the planned route takes the vehicle to an area where it may be difficult for the in-vehicle navigation device 206 to establish a sufficiently high bandwidth connection to upload the data to the command center 204. In some embodiments, the data gathered by the sensors in the vehicle may be uploaded to the command center 204 immediately after it is gathered if there is sufficient communication bandwidth to do so at the time the data is gathered. For example, some of the gathered data may be uploaded in real-time or near real-time after being gathered, there is a break in the communication pathway (e.g., insufficient bandwidth to upload the data), and the remaining data gathered on the mapping trip may be stored in the in-vehicle navigation device 206 and then uploaded to the command center 204 once the mapping trip is completed. Other combinations of storing the gathered data in the in-vehicle navigation device 206 and the uploading data to the command center 204 are contemplated to be within the scope of the present disclosure.

In some embodiments, time-sensitive data may be uploaded in real-time or near real-time. For example, time-sensitive data may include information such as whether it is currently raining near the vehicle, whether there is heavy traffic near the vehicle such that one or more of the cameras associated with the vehicle are blocked by the other traffic, or the presence of an emergency lane vehicle.

If the vehicle has not reached the end of the planned route (step 512, "no" branch), then the sensor data is gathered (step 518). In some embodiments, the sensor data may be stored in the in-vehicle navigation device 206, transmitted to the command center 204 (e.g., via wireless communication between the in-vehicle navigation device 206 and the command center 204), or a combination thereof.

A determination is made whether the vehicle is following the planned route (step 520). For example, the trip monitoring module 214 or the route detection module 232 in connection with the positioning module 230 and the lane detection module 234 may determine whether the vehicle is in a lane at a location designated by the route. If the vehicle is following the planned route (step 520, "yes" branch), then the method 500 loops back to step 510 to determine the vehicle's current location.

If the vehicle is not following the planned route (step 520, "no" branch), the reason for the vehicle not following the route is recorded (step 522). For example, one or more of the sensors on the vehicle may have indicated a road hazard (e.g., another vehicle, a pothole, or other road hazard) that prevented the driver from following the route. For example, if the planned route indicated that the driver was to change lanes at a certain location but the driver was prevented from changing lanes at the certain location due to a road hazard, this would indicate that the planned route is not being followed and the reason is recorded. Because each data collection route is planned to lane-specific precision, returning the vehicle to the specific lane of the planned route as quickly as possible is desired to help avoid having to repeat an entire data collection route or to repeat as short a segment of the data collection route as possible.

An alert that the vehicle is not following the planned route is generated (step 524). The alert is displayed on the in-vehicle navigation device 206 (step 526). For example, the alert may include an audio or visual notification presented to the user via the in-vehicle navigation device 206, e.g., a visual alert may be displayed on a user interface of the in-vehicle navigation device 206. The alert and the reason for the vehicle not following the planned route are uploaded to the command center 204 (step 528). By also providing this information to the command center 204, the command center 204 may be able to monitor the vehicle's progress in real-time. The method 500 then loops back to step 510 to determine the vehicle's current location.

In some embodiments, if the command center 204 is monitoring the vehicle's location in real-time, the command center 204 may make the determination whether the vehicle is following the planned route (step 520) and may be able to determine the reason why the vehicle is not following the planned route (step 522). In such an embodiment, the alert may be generated (step 524) at the command center 204 and the alert may then be sent to the in-vehicle navigation device 206 to be displayed on the in-vehicle navigation device 206 (step 526).

If the vehicle is not following the planned route (step 520, "no" branch), then additional navigation instructions may be generated to return the driver to the planned route as quickly as possible (step 530). The additional navigation instructions are displayed on the in-vehicle navigation device 206 (step 532) and the method 500 loops back to step 510 to determine the vehicle's current location. It is noted that while steps 522-528 and 530-532 are shown as separate actions to be taken if the vehicle is not following the planned route (step 520, "no" branch), these actions may be performed in parallel as shown in FIG. 5B or may be performed sequentially (e.g., step 530 may be performed after step 528 or step 522 may be performed after step 532).

In some embodiments, when the alert and the reason for the vehicle not following the planned route are uploaded to the command center 204 (step 528), this may trigger the command center 204 to generate the additional navigation instructions (e.g., step 530 may follow step 528). After receiving the alert, the command center 204 may access the planned route and, based on the current vehicle location, may determine the additional navigation instructions needed to return the vehicle to the planned route as quickly as possible (step 530). The command center 204 may then send the additional navigation instructions to the in-vehicle navigation device 206 for display (step 532). In other embodiments, when the vehicle is not following the planned route, the in-vehicle navigation device 206 may determine the additional navigation instructions needed to return the vehicle to the planned route as quickly as possible (step 530) and then displays the additional navigation instructions (step 532).

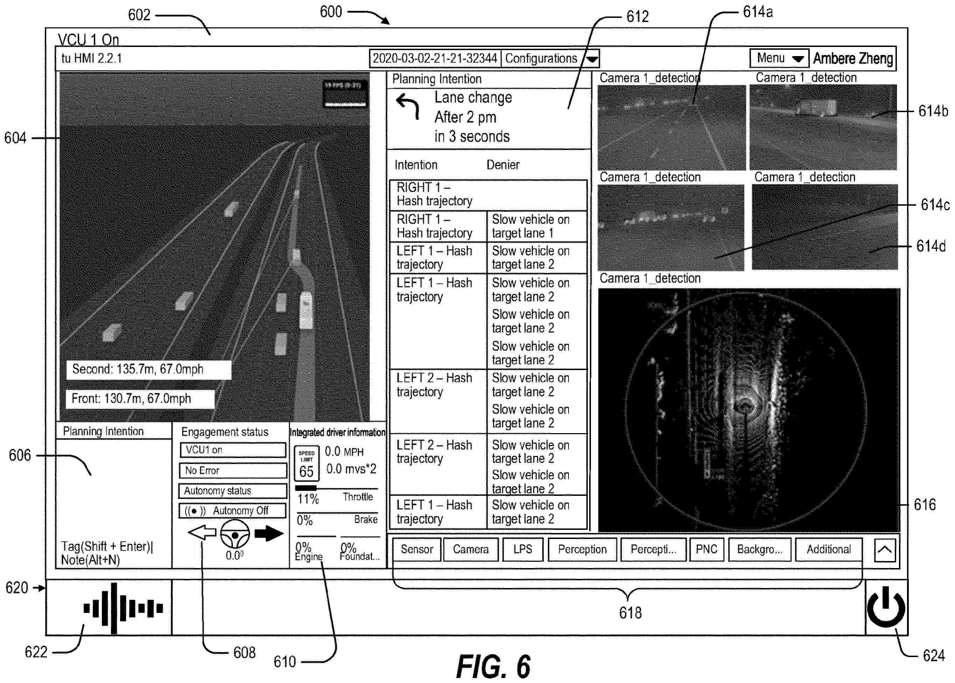

FIG. 6 shows an exemplary in-vehicle navigation device 600 (e.g., in-vehicle navigation device 206), according to some embodiments of the present disclosure. The in-vehicle navigation device 600 may include a user interface 602 with a map display portion 604, a notes to driver portion 606, an autonomous vehicle driving information portion 608, a current vehicle information portion 610, a navigation information portion 612, one or more camera display portions 614a-614d, a LIDAR display portion 616, and a user interface control portion 618. The in-vehicle navigation device 600 may also include a physical button portion 620 with a voice note activation button 622 and a power button 624. It is noted that additional physical control buttons may be included in physical button portion 620 to control other functions or features of the in-vehicle navigation device 600. For example, additional physical control buttons may be provided to activate or deactivate one or more cameras associated with the vehicle or to activate or deactivate the LIDAR unit.

The map display portion 604 may include a current location of the vehicle and a portion of an area adjacent to the vehicle's current location. In the example shown in FIG. 6, the map portion 604 shows that the vehicle is on a four lane highway.

The notes to driver portion 606 may include any notes to be provided to the driver and may be keyed to the vehicle's current location such that a note will only display when the vehicle is at the location on the route associated with the note. For example, the notes may be created during a route planning process performed at the command center 204 and may be loaded onto the in-vehicle navigation device 600 with the route.

The autonomous vehicle driving information portion 608 may include information relating to when the vehicle is in an autonomous driving mode. The current vehicle information portion 610 may include current vehicle information such as the posted speed limit for where the vehicle is currently located, current vehicle speed, current vehicle acceleration, and related vehicle operation information.

The navigation information portion 612 may include specific navigation directions to the vehicle driver, such as when to change lanes or to make turns. As shown in FIG. 6, the navigation directions may also include information relating to why the driver was unable to follow a particular navigation direction. For example, if the navigation direction was for the driver to change lanes at a predetermined location but was unable to change lanes because another vehicle was in the other lane at the time, that information may be logged and displayed in the navigation information portion 612.

Camera display portions 614a-614d may show what each camera located on the vehicle is capturing. As shown in FIG. 6, there are four camera display portions 614a-614d, but the number of camera display portions 614 may be changed to match the number of cameras located on the vehicle. In some embodiments, one camera display portion 614 may be included in the screen 600 and the driver may be able to select the camera displayed from among the different cameras. Other configurations of the camera display portion 614 are possible and are within the scope of the present disclosure.

The LIDAR display portion 616 may show data captured by LIDAR sensors on the vehicle, such as displaying a LIDAR point cloud data item. The user interface control portion 618 may include one or more command buttons. In some embodiments, the command buttons may be configured to select different portions of screen 600 to highlight or to include information corresponding to the selected buttons to be displayed on the screen 600. The user interface control portion 618 may include other graphical user interface elements to assist the driver of the vehicle in displaying information relevant to the driver's operation of the vehicle.

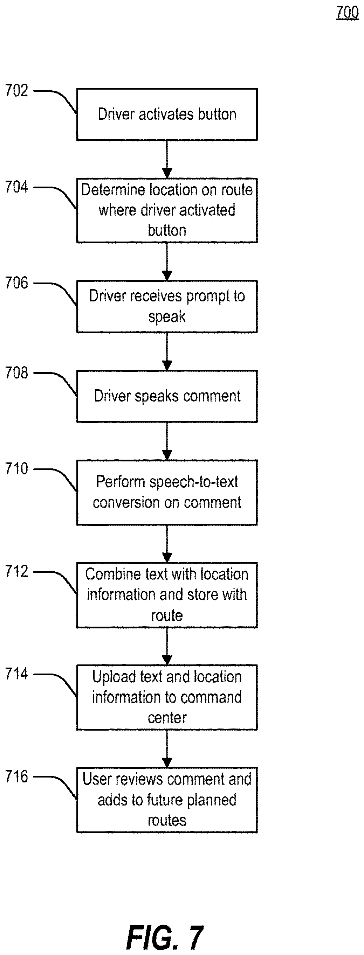

The voice note activation button 622, when pressed, may activate a process to add a voice comment spoken by the driver to be associated with the present location of the vehicle. Details of this process are described below in connection with FIG. 7. The power button 624 may be used to power the in-vehicle navigation device 600 on and off.

In some embodiments, instead of pressing the physical voice note activation button 622, there may be a "soft" button on the user interface control portion 618 that may be touched by the driver to activate the process to record the note.

FIG. 7 shows a flowchart of an exemplary method 700 for a vehicle driver to add a voice comment to a planned route and relating to the present location of the vehicle, according to some embodiments of the present disclosure. The navigation device may detect that the driver has activated a button to begin recording the voice comment (step 702). The button may include the physical voice note activation button 622 or a "soft" button on the user interface control portion 618. The navigation device may record the location of the vehicle at the time the button is activated (step 704).

The navigation device may issue a prompt for the driver to speak (step 706). For example, the prompt may include an audio statement (e.g., "Please speak the comment"), an audible signal (e.g., a beep), or a combination thereof. The navigation device may then record an audio clip. For example, the navigation device may record a verbal comment from the driver, e.g., "There is a pothole in lane 3" (step 708).

Speech-to-text conversion is performed on the comment (step 710). In some embodiments, the speech-to-text conversion may be performed by the in-vehicle navigation device 600. In other embodiments, the audio comment may be sent to the command center 204 and the command center 204 may perform the speech-to-text conversion.

The text version of the comment is combined with the location information determined when the button was activated and this information is stored with the route (step 712). For example, a tag may be added to the location on the route to indicate that a comment is associated with the location.

The text version of the comment and the location information are uploaded to the command center 204 (step 714). In an example where the command center 204 performs the speech-to-text conversion, step 714 may be performed before step 710. In some embodiments, the comment may be stored in the in-vehicle navigation device 600 to be uploaded to the command center 204 at the end of the route (if the in-vehicle navigation device 600 is performing the speech-to-text conversion) or may be uploaded to the command center 204 in real-time (if the command center 204 is performing the speech-to-text conversion).

A user at the command center 204 reviews the comment and may add the comment to future planned routes that travel through the location associated with the comment (step 716). It is noted that step 716 is optional and may not be performed in some embodiments. The user may review the comment to verify the accuracy of the comment and to determine whether the comment has sufficient importance or relevancy to be added to future planned routes that travel through the same location. In some embodiments, after the comment has been approved for adding to future planned routes, any future planned route that includes the location associated with the comment may automatically include the comment in the future planned route as a note to the driver (e.g., a note to be displayed to the driver in the notes to driver portion 606). In other embodiments, after the comment has been approved, the comment may be added to already planned but not yet completed routes.

In other embodiments, the user at the command center 204 may assign a rating to the comment, to indicate an importance level or an urgency level of the comment. For example, if a driver identifies a potentially hazardous road situation, the user may assign a high importance or high urgency to the comment. In such circumstances, the comment may be sent immediately from the command center 204 to any in-vehicle navigation device 600 that is associated with a planned route that will travel through the identified location.

In this document, the term "exemplary" is used to mean "an example of' and, unless otherwise stated, does not imply an ideal or a preferred embodiment.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog or digital components that are, for example, integrated as part of a printed circuit board. Alternatively, or additionally, the disclosed components or modules can be implemented as an Application Specific Integrated Circuit (ASIC) or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware, or firmware. The connectivity between the modules or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

As used herein, unless specifically stated otherwise, the term "or" encompasses all possible combinations, except where infeasible. For example, if it is stated that a component includes A or B, then, unless specifically stated otherwise or infeasible, the component may include A, or B, or A and B. As a second example, if it is stated that a component includes A, B, or C, then, unless specifically stated otherwise or infeasible, the component may include A, or B, or C, or A and B, or A and C, or B and C, or A and B and C.

Only a few implementations and examples are described and other implementations, enhancements and variations can be made based on what is described and illustrated in this disclosure.

Implementations of the disclosure can be described in view of the following clauses, the features of which can be combined in any reasonable manner.

The following items are disclosed herein.

### ITEMS

1. A method for monitoring a high definition map data collection trip, comprising:
   recording data collected from one or more sensors associated with a vehicle;
   determining a current vehicle location;
   determining whether the vehicle is following a planned route, based on the current vehicle location;
   on a condition that the vehicle is not following the planned route:
      including an indication in the recorded data collected from the one or more sensors associated with the vehicle that the vehicle is off-route;
      generating additional navigation instructions, wherein the additional navigation instructions return the vehicle to the planned route; and
      providing the additional navigation instructions to a driver of the vehicle.
2. The method of item 1, wherein determining whether the vehicle is following the planned route includes:
   determining lane-specific information about the current vehicle location;
   comparing the lane-specific information about the current vehicle location with corresponding lane-specific information of the planned route; and
   determining that the vehicle is not following the planned route based on the comparison.
3. The method of item 1 or 2, wherein the additional navigation instructions include lane-specific information to return the vehicle to the planned route.
4. The method of any preceding item, wherein providing the additional navigation instructions to a driver of the vehicle includes displaying the additional navigation instructions on an in-vehicle navigation device.
5. A method for monitoring a high definition map data collection trip, comprising:
   recording data collected from one or more sensors associated with a vehicle;
   determining a current vehicle location;
   determining whether the vehicle is following a planned route, based on the current vehicle location;
   on a condition that the vehicle is not following the planned route:
      including an indication in the recorded data collected from the one or more sensors associated with the vehicle that the vehicle is off-route;
      generating an alert;
      uploading the alert to a command center;
      receiving additional navigation instructions from the command center, wherein the additional navigation instructions return the vehicle to the planned route; and
      displaying the additional navigation instructions on a display of an in-vehicle navigation device.
6. The method of item 5, wherein determining whether the vehicle is following the planned route includes:
   determining lane-specific information about the current vehicle location;
   comparing the lane-specific information about the current vehicle location with corresponding lane-specific information of the planned route; and
   determining that the vehicle is not following the planned route based on the comparison.
7. The method of item 5 or 6, wherein on a condition that the vehicle is not following the planned route, the method further comprises:
   determining a reason why the vehicle is not following the planned route; and
   uploading the alert and the reason to the command center.
8. The method of item 5-7, wherein on a condition that the vehicle is not following the planned route, the method further comprises:
   displaying a visual alert on the display of the in-vehicle navigation device; or
   outputting an audio signal via the in-vehicle navigation device.
9. The method of item 5-8, further comprising:
   receiving the planned route at the in-vehicle navigation device from the command center; and
   displaying the planned route on the display of the in-vehicle navigation device.
10. A system for monitoring a high definition map data collection trip, comprising: an in-vehicle navigation device including a display and a processor configured to:
   record data collected from one or more sensors associated with a vehicle;
   determine a current vehicle location;
   determine whether the vehicle is following a planned route, based on the current vehicle location;
   on a condition that the vehicle is not following the planned route:
      include an indication in the recorded data collected from the one or more sensors associated with the vehicle that the vehicle is off-route;
      generate an alert;
      upload the alert to a command center;
      receive additional navigation instructions from the command center, wherein the additional navigation instructions return the vehicle to the planned route; and
      display the additional navigation instructions on a display of an in-vehicle navigation device.
11. The system of item 10, wherein the processor is further configured to determine whether the vehicle is following the planned route by:
   determining lane-specific information about the current vehicle location;
   comparing the lane-specific information about the current vehicle location with corresponding lane-specific information of the planned route; and
   determining that the vehicle is not following the planned route based on the comparison.
12. The system of item 10 or 11, wherein on a condition that the vehicle is not following the planned route, the processor is further configured to:
   determine a reason why the vehicle is not following the planned route; and
   upload the alert and the reason to the command center.
13. The system of item 10-12, wherein on a condition that the vehicle is not following the planned route, the processor is further configured to:
   display a visual alert on the display of the in-vehicle navigation device; or
   output an audio signal via the in-vehicle navigation device.
14. The system of item 10-13, wherein the processor is further configured to:
   receive the planned route from the command center; and
   display the planned route on the display of the in-vehicle navigation device.
15. A computer-readable storage medium storing a set of instructions that is executable by one or more processors of an electronic device to cause the electronic device to perform operations for monitoring a high definition map data collection trip, the operations comprising:
   recording data collected from one or more sensors associated with a vehicle;
   determining a current vehicle location;
   determining whether the vehicle is following a planned route, based on the current vehicle location;
   on a condition that the vehicle is not following the planned route:
      including an indication in the recorded data collected from the one or more sensors associated with the vehicle that the vehicle is off-route;
      generating an alert;
      uploading the alert to a command center;
      receiving additional navigation instructions from the command center, wherein the additional navigation instructions return the vehicle to the planned route; and
      displaying the additional navigation instructions on a display of an in-vehicle navigation device.
16. The computer-readable storage medium of item 15, wherein determining whether the vehicle is following the planned route includes:
   determining lane-specific information about the current vehicle location;
   comparing the lane-specific information about the current vehicle location with corresponding lane-specific information of the planned route; and
   determining that the vehicle is not following the planned route based on the comparison.
17. The non-transitory computer-readable storage medium of item 15-16, wherein on a condition that the vehicle is not following the planned route, the operations further comprises:
   determining a reason why the vehicle is not following the planned route; and
   uploading the alert and the reason to the command center.
18. The computer-readable storage medium of item 15-17, wherein on a condition that the vehicle is not following the planned route, the operations further comprises:
   displaying a visual alert on the display of the in-vehicle navigation device; or
   outputting an audio signal via the in-vehicle navigation device.
19. The computer-readable storage medium of item 15-18, wherein the set of instructions that is executable by one or more processors of the electronic device to cause the electronic device to further perform operations comprising:
   receiving the planned route at the in-vehicle navigation device from the command center; and
   displaying the planned route on the display of the in-vehicle navigation device.
20. A data processing device, comprising:
   a memory configured to store executable program code; and
   one or more processors configured to read the executable program code stored in the memory to cause the data processing device to perform operations for monitoring a high definition map data collection trip, the operations comprising:
      recording data collected from one or more sensors associated with a vehicle;
      determining a current vehicle location;
      determining whether the vehicle is following a planned route, based on the current vehicle location;
      on a condition that the vehicle is not following the planned route:
         including an indication in the recorded data collected from the one or more sensors associated with the vehicle that the vehicle is off-route;
         generating an alert;
         uploading the alert to a command center;
         receiving additional navigation instructions from the command center, wherein the additional navigation instructions return the vehicle to the planned route; and
         displaying the additional navigation instructions on a display of an in-vehicle navigation device.
21. An in-vehicle navigation device, comprising:
   one or more processors configured to cause the in-vehicle navigation device to perform:
   receive a voice comment activation command;
   determine a current vehicle location when it is determined that the voice comment activation command has been received;
   record an audio comment spoken by a driver of the vehicle; and
   upload the current vehicle location and content associated with the audio comment to a command center.
22. The in-vehicle navigation device of item 21, wherein the voice comment activation command is received via the driver of the vehicle activating a button.
23. The in-vehicle navigation device of item 22, wherein the button is a physical button on the in-vehicle navigation device.
24. The in-vehicle navigation device of item 22-23, wherein the button is a button on a graphical user interface presented on a display of the in-vehicle navigation device.
25. The in-vehicle navigation device of item 21-24, wherein the one or more processors are further configured to cause the in-vehicle navigation device to perform: perform speech-to-text conversion on the audio comment.
26. The in-vehicle navigation device of item 25, wherein the content associated with the audio comment includes text generated from the speech-to-text conversion.
27. The in-vehicle navigation device of item 21-26, wherein the content associated with the audio comment includes the audio comment.
28. The in-vehicle navigation device of item 21-27, wherein the current vehicle location is associated with a planned route.
29. The in-vehicle navigation device of item 28, wherein the current vehicle location and the content associated with the audio comment are stored with the planned route.
30. The in-vehicle navigation device of item 29, wherein the current vehicle location and the content associated with the audio comment are stored as a tag with the planned route.
31. A command center for monitoring a high definition map data collection trip, comprising one or more processors configured to:
   receive a vehicle location and content associated with an audio comment from an in-vehicle navigation device; and
   store the vehicle location and the content associated with the audio comment with a planned route.
32. The command center of item 31, wherein the content associated with the audio comment includes a text version of the audio comment.
33. The command center of item 31-32, wherein the content associated with the audio comment includes the audio comment and the one or more processors are further configured to:
   perform speech-to-text conversion on the audio comment.
34. A method for associating a driver comment with a current vehicle location, comprising:
   receiving an indication that a driver of a vehicle has provided a voice comment activation command;
   determining a current vehicle location where the driver provided the voice comment activation command;
   providing a prompt to the driver to speak an audio comment;
   recording the audio comment; and
   uploading the current vehicle location and content associated with the audio comment to a command center.
35. The method of item 34, wherein the voice comment activation command is received via the driver of the vehicle activating a button.
36. The method of item 35, wherein the button is a physical button on an in-vehicle navigation device.
37. The method of item 35-36, wherein the button is a button on a graphical user interface presented on a display of an in-vehicle navigation device.
38. The method of item 34-36, further comprising:
   performing speech-to-text conversion on the audio comment.
39. The method of item 38, wherein the content associated with the audio comment includes text generated from the speech-to-text conversion.
40. The method of item 34-39, wherein the content associated with the audio comment includes the audio comment.
41. The method of item 34-40, wherein the current vehicle location is associated with a planned route.
42. The method of item 41, wherein the current vehicle location and the content associated with the audio comment are stored with the planned route.
43. The method of item 42, wherein the current vehicle location and the content associated with the audio comment are stored as a tag with the planned route.

## Claims

1. A method for monitoring a high definition map data collection trip, comprising:
recording data collected from one or more sensors associated with a vehicle;
determining a current vehicle location;
determining whether the vehicle is following a planned route, based on the current vehicle location;
on a condition that the vehicle is not following the planned route:
including an indication in the recorded data collected from the one or more sensors associated with the vehicle that the vehicle is off-route;
generating an alert;
uploading the alert to a command center;
receiving additional navigation instructions from the command center, wherein the additional navigation instructions return the vehicle to the planned route; and
displaying the additional navigation instructions on a display of an in-vehicle navigation device.

2. The method of claim 1, wherein determining whether the vehicle is following the planned route includes:
determining lane-specific information about the current vehicle location;
comparing the lane-specific information about the current vehicle location with corresponding lane-specific information of the planned route; and
determining that the vehicle is not following the planned route based on the comparison.

3. The method of claim 1 or claim 2, wherein on a condition that the vehicle is not following the planned route, the method further comprises:
determining a reason why the vehicle is not following the planned route; and
uploading the alert and the reason to the command center.

4. The method of any preceding claim, wherein on a condition that the vehicle is not following the planned route, the method further comprises:
displaying a visual alert on the display of the in-vehicle navigation device; or
outputting an audio signal via the in-vehicle navigation device.

5. The method of any preceding claim, further comprising:
receiving the planned route at the in-vehicle navigation device from the command center; and
displaying the planned route on the display of the in-vehicle navigation device.

6. A method for monitoring a high definition map data collection trip, comprising:
recording data collected from one or more sensors associated with a vehicle;
determining a current vehicle location;
determining whether the vehicle is following a planned route, based on the current vehicle location;
on a condition that the vehicle is not following the planned route:
including an indication in the recorded data collected from the one or more sensors associated with the vehicle that the vehicle is off-route;
generating additional navigation instructions, wherein the additional navigation instructions return the vehicle to the planned route; and
providing the additional navigation instructions to a driver of the vehicle.

7. The method of claim 6, wherein determining whether the vehicle is following the planned route includes:
determining lane-specific information about the current vehicle location;
comparing the lane-specific information about the current vehicle location with corresponding lane-specific information of the planned route; and
determining that the vehicle is not following the planned route based on the comparison.

8. The method of claim 6 or claim 7, wherein the additional navigation instructions include lane-specific information to return the vehicle to the planned route.

9. The method of any of claims 6 to 8, wherein providing the additional navigation instructions to a driver of the vehicle includes displaying the additional navigation instructions on an in-vehicle navigation device.

10. A system for monitoring a high definition map data collection trip, comprising: an in-vehicle navigation device including a display and a processor configured to:
perform the method of any preceding claim.

11. A computer-readable storage medium storing a set of instructions that is executable by one or more processors of an electronic device to cause the electronic device to perform operations for monitoring a high definition map data collection trip, the operations comprising the method of any of claims 1 to 9.

12. A data processing device, comprising:
a memory configured to store executable program code; and
one or more processors configured to read the executable program code stored in the memory to cause the data processing device to perform operations for monitoring a high definition map data collection trip, the operations comprising:
the method of any of claims 1 to 9.
